# EUROPEAN PATENT APPLICATION

(11) **EP 1 533 683 A2**
(43) Date of publication of application: **25.05.2005**
(21) Application number: 04380231.3
(22) Date of filing: 19.11.2004
(51) Int. Cl.: G06F 3/00

(54) **Mixed reality simulation system**

(30) Priority: 21.11.2003 ES 200302732
(71) Applicant: Seat, S.A., 08040 Barcelona (ES)
(72) Inventor: Gutierrez Plaza, Sonia, 08760 Martorell-Barcelona (ES); Martos Ortega, Antonio, 08760 Martorell-Barcelona (ES)
(74) Representative: Carvajal y Urquijo, Isabel

(57) **Abstract**

A mixed reality simulation system, comprising
- a real-time motion capture system (20), including the following elements connected to one another.
   - at least one data processing unit (PC1, PC2),
- a group of markers (22) which can be attached to the body of an active user (100) of the system,
- a plurality of cameras (21) arranged such that at all times, at least two of them can capture a same marker (22),
- two data gloves (30),
- a graphic station (10),
- a first display device (40) for said active user, and
- at least one physical mock-up (60),
said graphic station being configured to process the information provided by the motion capture system and data gloves, and to send said information in the form of images to the first display device in real time.

## Description

### Field of the Invention

The present invention is encompassed within the virtual analysis and simulation techniques, especially applicable to the automotive sector.

### Background of the Invention

With regard to the automobile sector, the launching of a new model on the market must face the constant reduction of development times, required by the decrease of the life cycle of vehicles and the necessary diversification of the range in order to meet the greatest possible demand. The success of this adaptation is, to a large extent, due to the introduction and to the development of virtual analysis and simulation techniques. Until the introduction of the Virtual Reality (VR), all design, surface quality, and ergonomic assessments were carried out on physical models hand-modeled or milled during the initial phase of the project, or in form of functioning vehicles during the prototype phase. With the use of VR, the number of necessary models in each project has been reduced, since the design and surface quality assessments are already largely carried out on virtual models, with the saving of time and costs involved therein.

Today, virtual reality allows for stepping up making decisions about certain projects: the manufacture time of a virtual prototype is, for example, one week, in comparison with two months needed for a milled model. This allows for taking into account a greater number of variants, whereby the physical prototype phase is reached with the project being more developed.

To date, technology has allowed for introducing people into spaces which do not physically exist, rather they are just a representation conceived from computer equipments (by means of VR).

### Description of the Invention

The invention refers to a system according to claim 1. Preferred embodiments of the system are defined in the dependent claims.

It is an objective of the present invention to provide a system which allows for carrying out different simulations in virtual prototypes, without needing to resort to physical prototypes.

It is also an objective of the present invention to provide a system implementing the sense of touch to the sense of sight, which is the one that is already applied for virtual analyses, such that the user of the system is more immersed in the virtuality and, therefore, his assessment will be more objective.

By means of the system of the invention, the restrictions which the real observer has in a physical prototype are introduced in the virtual assessment.

The system of the invention allows for making more objective assessments of virtual automobile prototypes without needing to completely carry out the physical models.

The mixed reality simulation system of the present invention comprises:
- a real time motion capture system including the following elements connected to one another:
   - at least one data processing unit,
   - a group of markers which can be attached to the body of an active user of the system, said group of markers preferably defining the skeleton of said active user,
   - a plurality of cameras arranged such that at all times, at least two of them can capture a same marker,
   the data processing unit being configured to obtain and process a first data group relating to the information captured by said cameras and to extract a first group of position coordinates and directing vectors of the joints of said active user from said first data group, preferably by means of calculating the biomechanics of said active user,
- means of sending said first group of position coordinates and directing vectors to a graphic station,
- two data gloves configured to provide a second group of position coordinates and directing vectors of the fingers of the hands of said active user,
- means of sending said second group of position coordinates and directing vectors to a graphic station,
- a first display device for said active user, such as a stereoscopic helmet, and
- at least one physical mock-up, representative of a real environment, said graphic station being configured to process the information provided by the first and second group of position coordinates and directing vectors representative of a virtual environment and of the virtual body of the active user, and to send said information in real time in the form of images to the first display device,
   such that the images perceived by said active user of the system depend on the position of the head of said active user, on the position of said physical mock-up and on the position of the body of the active user in relation to the physical mock-up.

As a result of the physical mock-up, the active user is in the correct position with regard to the virtual environment and has physical contact with those parts defined for the analysis; this physical mock-up allows the active user of the system to relate, by means of touch, the virtuality which he is seeing with the reality which he is touching.

This active user of the system is the one who is immersed in the "virtual environment" and can interact in it; this active user is in the same position in which he would be in the real prototype and has physical contact with the physical mock-up.

Said physical mock-up is preferably constituted of elements which can be adjusted and calibrated, such that said mock-up is multipurpose for different models.

By means of this system, a leap is made from Virtual Reality to Mixed Reality, to achieve that the virtual validation is logical in addition to being objective, giving priority to those points of view which are visible and important. The virtual body in the prototype becomes a geometric representation of the body which, with the restrictions imposed by a physical mock-up, aids in achieving an assessment of the virtual prototype which is much closer to the real one. By means of combining physical elements (different mock-ups corresponding to different areas of the vehicle) and virtual elements (remaining geometries of the environment of each mock-up), the system allows, for example, for assessing the ergonomics of any interior of a vehicle in a very early phase of its development.

Preferably, the system furthermore comprises a second display device for at least one passive user of the system. This passive user or passive users observe the results of the simulation on said second display device, such as a stereoscopic screen or StereoWall, but cannot interact in the system. The passive user or passive users have the option to choose which point of view they wish: the same as that of the active user, or a point of view without reference to said user.

The system of the invention presents several technological innovations:
i) The combination of different input devices (optical motion capture system, data glove), and different effector devices (stereoscopic helmet, stereoscopic screen) in a single system, all of them managed by a new generation graphic station.
ii) The adaptation of an optical capture system coming from the world of computer animation, for engineering projects, with certain light, accuracy and real time information processing requirements.
iii) The use of a Virtual Reality modular software which allows for: configuring the different effector devices; representing the virtual surfaces to be assessed with a high level of definition and realism; using different avatars within the virtual scene, either adapting them to the anthropometric measurements of the different users or using human models available in libraries; creating light simulations in the virtual scene with results very close to reality; processing all the data of the input devices and modifying the virtual scene to real time, using the resources of our hardware to the most.
iv) The evolution towards a new, more immersive concept of virtual reality, the mixed reality. This new concept attempts to make up for the current insufficiencies of virtual reality with regard to the sense of touch.

Of the five main senses (sight, hearing, touch, taste and smell), Virtual Reality has basically evolved in the field of the sense of sight and of hearing. With regard to touch, there are some force feedback devices at the prototype level which are starting to work in this field. However, all of them encounter a basic problem of lack of computers capable of working with a refresh rate of 1000 fps, which is the frequency necessary for misleading the sense of touch, in comparison to 30 fps necessary for the sense of sight.

Due to all this, the system uses the concept of mixed reality, as it uses, on one hand, virtual reality effector devices for the sense of sight, and on the other hand, a physical mock-up introducing restrictions for the sense of touch.

The following can be highlighted among the advantages of the system:
- By means of Mixed Reality, a logical virtual validation is obtained.
- In the economic aspect, adopting this system allows for analyzing the entire range of versions and options of each product in each physical mock-up.
- The most important advantage is development time saving, since the mock-ups allow for carrying out different tests with little and simple changes, whether they are of physical parts or of virtual parts, which are easy to carry out. Thus, it is a system designed for providing a great flexibility to the configuration of the simulations.
- They are simulations providing quality to the assessments, since they use virtual files of exact theoretical geometry and a series of physical mock-ups calibrated with an error of less than 0.5 mm.

The system of the invention can also be used for carrying out the following analyses, which will expand the use of the system of the invention throughout the entire course of the life cycle of new products:
- Assembly analysis: the system of the invention is applied for the analysis of assembly and disassembly of all the components of the vehicle, both for the future recycling thereof, and so that the end user can easily carry out the basic maintenance tasks, changing the lamps, wheels, battery, etc.
- Virtual Manufacturing: the system of the invention is applied for analyzing the entire manufacturing process in a Virtual Factory. The ergonomics of the operations and of the workstation can be analyzed, and it can collaborate in defining the methods and times of the jointing, welding, painting and assembly processes, such that they are as comfortable as possible and ensure a higher speed of the operation and the maximum implementation quality. This industrial design task will include the simplification of the tasks to be carried out on the production line by means of containers, trolleys and tools making the use thereof by the worker easy.

Currently, these analyses are already carried out, but they are carried out on physical prototypes, in the case of the assemblies, and with the pre-series in the case of the manufacturing process. With the aid of the system of the invention, they are carried out on Virtual Prototypes and in the Virtual Factory, reducing the development time and costs of the new products, and reducing their manufacturing time.

### Brief Description of the Drawings

A series of drawings helping to better understand the invention and specifically related to an embodiment of said invention, which is presented as a non-limiting example thereof, is very briefly described below.
Figure 1 shows a scheme of the system of the invention and the main elements making it up.
Figure 2 shows a possible embodiment of part of the motion capture system.
Figure 3 shows two possible embodiments of a physical mock-up.

### Description of a Preferred Embodiment of the Invention

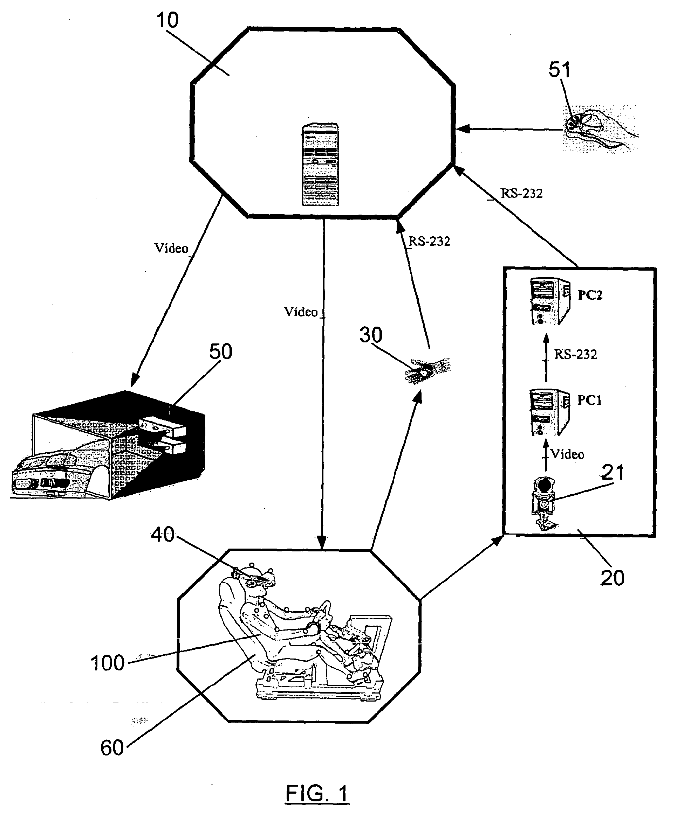

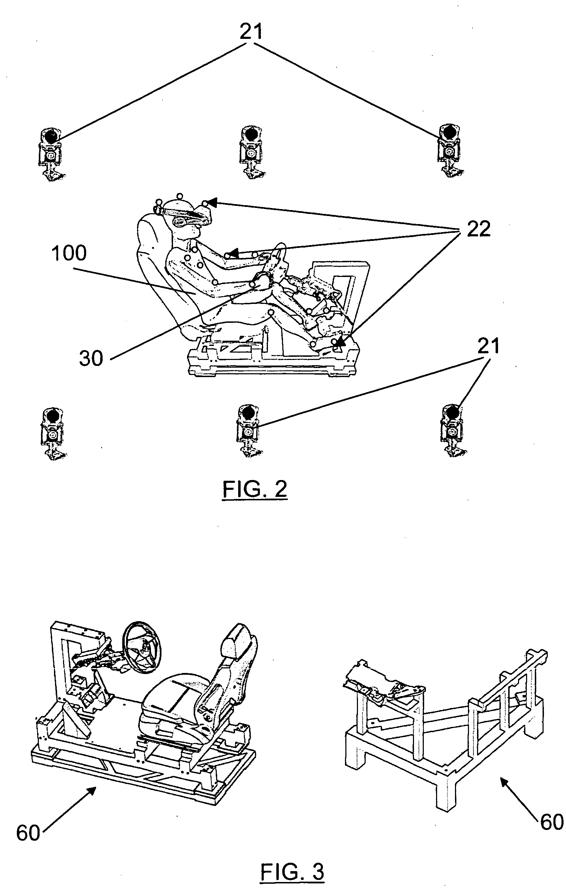

Figure 1 shows a scheme of the mixed reality simulation system according to a preferred embodiment thereof. As shown in said scheme, the following can be distinguished in the simulation system of the invention:
- a graphic station 10 on which, among others, the virtual reality software runs,
- a motion capture system 20 (shown in more detail in Figure 2), which is one of the inputs of the system,
- two data gloves 30 (of which only one is shown to avoid complicating the drawing), which is another one of the inputs of the system,
- a 3D mouse 51 for obtaining the points of view desired by the passive users of the system,
- a stereoscopic helmet 40 on the head of an active user 100,
- a stereoscopic screen 50 for viewing by one or more passive users (not shown), and
- the physical mock-up 60 (shown in more detail in Figure 3), in this case representative of the driving position.

According to this embodiment, the graphic station 10 is a new generation supercomputer capable of modeling more than a million polygons and 256 Mbytes of textures in real time. It has the capacity to yield large amounts of information, and it processes all the data reaching it, modifying the virtual scene in real time.

As shown in Figure 2, used in the present invention is a motion capture system which is an adaptation of a capture system used in the world of animation. It consists of six cameras 21, two more than the standard system used in animation, to be able to maximally reduce the areas hidden from the cameras which are created when using the physical mock-up within the capture area.

In this case, illumination is by means of infrared light, so that the light of the capture system does not prevent the passive users from viewing the simulation, which is carried out on the stereoscopic screen 50 (2.4 x 1.8 m) adjacent to the location of the mock-up.

The motion capture system also includes a set of markers for tracking the entire body of the active user 100; the number of markers is according to the analysis to be carried out, depending on whether the active user is standing or sitting; twenty-two markers 22, the sitting model, have been used in the present embodiment.

It likewise includes two computers PC1 and PC2. In computer PC1, there are six graphic cards, one per camera, which receive the images of the capture area at a frequency of 50 Hz. This PC simply obtains this information and transmits it to PC2 for its subsequent processing.

PC2 has a software installed which allows for processing the images obtained in PC1 in order to extract the coordinates of each position and the orientation of the joints of the active user. This software is especially designed for efficiently solving the problem of occlusions, common to all optical motion capture systems. The reconstruction of the 3D coordinates of a joint is carried out by means of the data of the lens (coming from the calibration process) and the position of the centroid of the projection of said marker in at least two cameras. If a marker is not simultaneously viewed by two or more cameras at a given time, an "occlusion" occurs. The software of this system solves this problem by means of a sophisticated mathematical model allowing for the calculation of the optical solution for the position of all the markers, even in the event that occlusions occur.

Once the position coordinates and directing vectors of all the joints (bones) are extracted, they are sent in packages to the graphic station 10 through the RS-232 serial port at a rate of 100 Mbit/s.

Another important aspect of the operating of the motion tracking and capture system is the capture volume, since it directly affects the accuracy .of the capture. The system is designed for optimally working at a maximum volume of 4 m in diameter and 2.2 m in height. To that end, the cameras must be arranged at a diameter of 7 m and a height of 2.8 m. If working in these conditions, accuracy is 2.2 m. The first physical mock-up 60 exhibited has dimensions of 1800 x 750 x 1400 mm, thus the capture volume can be reduced to 2 m in diameter and 2 m in height, whereby accuracy will increase up to about 1.5 mm.

In order to have a highly accurate capture of the hand motions, the system of the invention uses the data gloves 30, which allow for capturing the exact position of each finger. The coordinates of the position of the hand within the system are obtained from the optical motion capture system. The coordinates relating to different phalanges of the hand are captured by the sensors (strain gauges) incorporated by the glove. Both pieces of data are sent to the graphic station independently and through different RS-232 serial ports.

For its part, the stereoscopic helmet 40 is the most important display device (effector) of the system, since it provides the necessary immersion so that the simulation is as real as possible for the active user 100 of the system of the invention. The technical features of this stereoscopic helmet should be: high resolution (1600 x 1200 pixels), field of vision approximately like that of the human eye (140° horizontally and 90° vertically), and ergonomics of use (light-weight, easily adaptable to different users, etc.). The stereoscopic helmets currently available on the market approximating these features do so only in resolution and field of vision, but not in ergonomics, since they use CRT technologies (Cathode Ray Tube) and need special structures to support their large weight. Another very important drawback is their high cost. Due to all this, the system of the invention uses the 3D CyberMIND HI-RES 900 stereoscopic helmet of lower resolution and field of vision, but with good ergonomics; in a near future, it is expected that some of the stereoscopic helmets currently being developed with LCD technology (Liquid Crystal Display) and aimed at the automotive industry may be introduced.

For its part, the stereoscopic screen 50, or StereoWall, consists of two CRT projectors with polarized filters and a fresnel screen. As a result of the use of polarized filters and glasses, it is possible to separate the image of the upper projector into one eye and that of the lower projector in the other, creating the effect in our brain that the objects projected on the fresnel screen, with special properties for preserving the polarization of light beams are in 3D. The great advantage of this virtual reality system is that it can be used by a large group of people at the same time. The simulations carried out by the system of the invention can thus be seen at the same time by different people from different project, design, marketing, quality, etc. areas (passive users of the system). These passive users have the option to choose which point of view they wish, the same as that of the active user or a point of view without reference to said user. In the second case, navigation within the virtual environment is carried out by means of the 3D mouse 51.

The physical mock-up 60 is an important element within the system of the invention, since it provides the feeling of touch to the active user 100 of the system, helping him to find his position in the virtual scene. For the design of the physical mock-up used in this embodiment, the following requirements have been taken into account:
- Preventing the mock-up from hiding the parts of the body of the user to prevent problems in capturing the motion thereof.
- The basic elements available to the user of any vehicle being at the driving position, that is the seat, steering wheel and pedals, have been introduced. However, the remaining basic elements can be introduced, such as the gear change knob, an interior rear-view mirror, etc.
- Light materials have been used for the structure (aluminum), preventing the mock-up from exceeding 100 kg in weight in any case.
- All the elements have been fixed on bases which can be adjusted and calibrated to have a multipurpose mock-up so that it can be used by different models.

Thus, for example, the seat will be interchangeable according to the model to be simulated, and fixed on guides; the steering-wheel and pedals: also interchangeable and adjustable according to the model.

In the embodiment shown, the mixed reality simulation system of the invention uses the following software for the correct performance of the simulation:
1. Virtual Reality Display (Virtual Design 2): which is the base software of the system, main features of which are:
   - A display motor very optimized for graphic stations, with yields much higher than any other solution on other platforms. It can achieve working with 1 million polygons and 256 Mbytes of textures at 30 fps (frames per second).
   - Modular software: it incorporates different modules with specific functions and modules for the on-line connection with other applications, thus using the graphic resources of the latter.
   - It can be configured for any type of graphic output: active stereo, passive stereo, stereoscopic helmet, etc.
   - It manages most Virtual Reality peripherals.
2. Ergonomics module (ERG VD2): this is what allows for on-line connecting of VD2 with the human body anthropometry software (RAMSIS VR), and obtaining an avatar within the virtual scene adapted to the anthropometric measurements of the active user of the system. Furthermore, this module acts as a link between the optical motion capture system and RAMSIS VR, to be able to join the motions of the skeleton of the user with those of the RAMSIS VR skeleton.
3. Human model software (RAMSIS VR): RAMSIS is a human model software. From studying populations of different countries (Germany, Japan, etc) and their evolution over time, it extracts different libraries of human models of current and future populations, which are the base for developing our product package. For example, if a vehicle model is being designed with a market launch planned for 2004, human models will be used which represent the anthropometric measurements which the population in the countries for which the vehicle is intended will have that year. There are different percentiles within these human model libraries, which represent the percentages of the population having that size or a smaller one. For example, the 95^{th} percentile is the largest model used, since 95% of the population has a smaller size than this model. Used for the system of the invention is RAMSIS VR which, in addition to the RAMSIS features, incorporates the possibility of being connected to VD2.

Knowing the elements making up the system of the invention, the operating thereof will be the following:

As indicated, the active user 100 of the system is located in the physical mock-up 60 in the same position in which he would be inside the reai prototype and has physical contact with the seat, pedals and steering wheel of the mock-up. He has markers 22 placed on his body at the joints and on the head. On his hands, he wears data gloves 30 connected to the graphic station 10 (input) through RS-232 serial ports. He wears a stereoscopic helmet 40 on his head connected to the graphic station 10 (output) through two video cables.

The active user 100 constantly receives the updated images, according to the position of his head, of the surfaces of the prototype to be assessed and of his own body (avatar) inside the latter. In the moment in which he moves his head, the optical motion capture system captures the new position. After processing the new position, it sends the data to the graphic station, which recalculates the new image of the virtual scene the user sees, and sends it through two VGA cables to the stereoscopic screen and through two video cables to the stereoscopic helmet. This operation is done at 30 fps, whereby the active user does not perceive any leap in the images and believes to really be inside the prototype.

If the motion of any part of the body, for example the right arm and hand, is added to the motion of the head, the motion capture system 20 and data gloves 30 send the data of the new position to the graphic station 10, where the VD2 software generates the avatar of the user in this new position, and the user also views it in real time. This simulation is very important so that the person using the system really has the feeling of being within the virtual environment.

With the elements indicated in this embodiment, the system is capable of carrying out two types of simulations:
- The first of them is that described above, in which the avatar of the virtual scene is adapted to the measurements of the active user so that the immersion of the latter is complete; in this case, the passive users or observers see the same as that which the active user is seeing.
- In the second case, different avatars of different sizes (percentiles) representing different human models of future populations are worked with. These different percentiles are joined to the motion of the active user, with the subsequent loss of immersion for the latter. On the contrary, the passive observers have the possibility of navigating within the virtual-scene to analyze points of view different from those of the active user. For example, if the position of the arm and of the hand on the armrest of the door is being simulated with the models of the 5^{th} percentile woman and 95^{th} percentile man, extreme cases usually worked with, the passive users can see the arm and hand resting on the door from all the points of view they decide, reaching conclusions about the ergonomics in each case in a much quicker manner than by means of simulations in conventional working stations.

## Claims

1. A mixed reality simulation system, comprising
- a real-time motion capture system (20), including the following elements connected to one another:
- at least one data processing unit (PC1, PC2),
- a group of markers (22) which can be attached to the body of an active user (100) of the system,
- a plurality of cameras (21) arranged such that at all times, at least two of them can capture a same marker (22),
the data processing unit being configured to obtain and process a first data group relating to the information captured by said cameras and to extract a first group of position coordinates and directing vectors of the joints of said active user from said first data group,
- means of sending said first group of position coordinates and directing vectors to a graphic station,
- two data gloves (30), configured to provide a second group of position coordinates and directing vectors of the fingers of the hands of said active user,
- means of sending said second group of position coordinates and directing vectors to a graphic station (10),
- a first display device (40) for said active user, and
- at least one physical mock-up (60),
said graphic station being configured to process the information provided by the first and second group of position coordinates and directing vectors, and to send said information in real time in the form of images to the first display device,
such that the images perceived by said active user of the system depend on the position of the head of said active user, on the position of said physical mock-up and on the position of the body of the active user with regard to the physical mock-up.

2. A system according to claim 1, **characterized in that** said data processing unit is configured to create a coordinate origin shared by a virtual environment related to the motion capture system (20) and by a real environment related to the physical mock-up (60).

3. A system according to any of the previous claims, **characterized in that** said group of markers (22) defines the skeleton of said active user.

4. A system according to claim 3, **characterized in that** said data processing unit is configured to extract a first group of position coordinates and directing vectors of the joints of said active user from said first data group by means of calculation of the biomechanics of said active user.

5. A system according to any of the previous claims, **characterized in that** said real-time motion capture system is a full-body motion capture system.

6. A system according to any of the previous claims, **characterized in that** said physical mock-up (60) is constituted of elements which can be adjusted and calibrated.

7. A system according to any of the previous claims, **characterized in that** the simulation system comprises a second display device (50) for at least one passive user of the system.

8. A system according to any of the previous claims, **characterized in that** said graphic station is configured to control the different elements constituting the system.
